# EUROPÄISCHE PATENTSCHRIFT

(11) **EP 2 824 420 B1**
(45) Veröffentlichungstag und Bekanntmachung des Hinweises auf die Patenterteilung: **06.03.2019**
(21) Anmeldenummer: 13175564.7
(22) Anmeldetag: 08.07.2013
(51) Int. Cl.: G01C 15/00

(54) **Lagebestimmungseinrichtung mit einer inertialen Messeinheit**
Device for determining position with an inertial measuring unit
Dispositif de détermination de position à l'aide d'une unité de mesure à inertie

(43) Veröffentlichungstag der Anmeldung: 14.01.2015
(73) Patentinhaber: Hexagon Technology Center GmbH, 9435 Heerbrugg (CH)
(72) Erfinder: Siercks, Knut, CH-9402 Mörschwil (CH)
(74) Vertreter: Kaminski Harmann

(56) Entgegenhaltungen:
- EP-A1- 2 570 769
- WO-A1-2006/074768
- WO-A1-2007/051575
- WO-A1-2009/026641
- WO-A2-2008/141817
- DE-C1- 19 532 104

## Beschreibung

Die Erfindung betrifft eine Lagebestimmungseinrichtung zur Bestimmung einer Position eines Zielobjekts und zur Verwendung in einem Koordinatenmessgerät oder einem geodätischen Vermessungssystem, nach dem Oberbegriff des Anspruchs 1 und ein mit einer solchen Lagebestimmungseinrichtung ausgestattetes Koordinatenmessgerät oder geodätisches Vermessungssystem nach dem Oberbegriff des Anspruchs 9 sowie ein Messverfahren nach dem Oberbegriff des Anspruchs 11 und ein zugehöriges Computerprogrammprodukt gemäss Anspruch 15.

Das Bestimmen von Richtungen, Winkeln und Längen als Lagen ist in vielen Anwendungsbereichen gefordert, wie beispielsweise in der geodätischen und industriellen Vermessung. Entwicklungen in der Winkelmesstechnik führten über mechanische Ablesevorgänge bis zur vollautomatisierten Lagevermessung, insbesondere Winkel- oder Streckenmessung, nach dem heutigen Stand der Technik.

Bekannte automatisierte Lagebestimmungseinrichtungen umfassen im Allgemeinen einen Codeträger und eine Abtasteinrichtung. Bei Winkelmesseinrichtungen, so genannten Winkel-Encodern, ist der Codeträger üblicherweise relativ zur Abtasteinrichtung um eine Achse drehbar ausgebildet, wobei dann eine Winkellage des Codeträgers die zu messende Grösse darstellt. Der Codeträger kann zum Beispiel eine Teilung oder Codierung zur Positionsbestimmung aufweisen, wobei die Codierung auf einer Oberfläche oder Mantelfläche des Codeträgers aufgebracht sein kann.

Zur automatischen Erfassung der Lage wird der relativ zur Abtasteinrichtung bewegbare Codeträger mittels unterschiedlicher Techniken von einem Lesekopf abgetastet. Bekannte Abtastverfahren sind elektronisch-magnetische, elektronische und optisch-elektronische Verfahren (also induktiv, kapazitiv bzw. optisch basiert).

Lagebestimmungseinrichtungen finden beispielsweise in Koordinatenmessgeräten bzw. Koordinatenmessmaschinen (Coordinate Measurement Machine, CMM) Anwendung.

Ein optischer Detektor eines Winkel-Encoders zur Auslesung eines optisch auslesbaren Codeträgers, wie in der WO 2008/019835 beschrieben, ist beispielsweise ein Photodetektor, ein CCD-Zeilen-Array oder ein CCD-Flächen-Array. Der Codeträger ist im Allgemeinen als Kreisscheibe oder als Kreisring ausgebildet und trägt entlang seines Umfangs einen optisch erfassbaren Positionscode, von dem ein Ausschnitt auf den Detektor abgebildet wird.

Bekannte Winkelmessvorrichtungen umfassen, wie beispielsweise in der WO 2007/051575 offenbart, im Allgemeinen einen so genannten Teilkreis und eine Abtasteinrichtung. Der Teilkreis ist als Codeträger ausgebildet und weist eine Teilung oder Codierung zur Positionsbestimmung am Kreis auf. Die Codierung ist auf einer Oberfläche, d.h. einer Kreisfläche oder einer Mantelfläche, des Codeträgers aufgebracht.

In der WO 2008/141817 wird eine Lagebestimmungseinrichtung mit einem Linear-Encoder und/oder einem Winkel-Encoder offenbart. Die Anordnung von Codeträger und Abtasteinrichtung ist derart, dass eine relative Bewegung in einem Freiheitsgrad, insbesondere eine Relativ-Drehbewegung oder eine relative Längsbewegung entlang einer Achse, zwischen Codeträger und Abtasteinrichtung ermöglicht wird.

Die bekannten Lagebestimmungseinrichtungen, insbesondere für Koordinatenmessgeräte oder geodätische Vermessungsgeräte, wie beispielsweise Totalstationen, weisen sehr unterschiedliche Vor- und Nachteile auf.

Bekannte Lage-Encoder, wie Linear-Encoder und Winkel-Encoder, sind gekennzeichnet durch eine hohe Messgenauigkeit zur Lieferung von relativer (also inkrementeller) oder absoluter Positionsbestimmungsdaten, aber eine relativ geringe Messgeschwindigkeit, beispielsweise in einer Grössenordnung zwischen 1 Hz und 20 Hz und daraus resultierende mögliche Auslesegeschwindigkeit. Fabrikate mit einer vergleichsweise erhöhten möglichen Messgeschwindigkeit weisen, insbesondere aufgrund dazu notwendiger aufwändigerer Mechanik und Elektronik, relativ hohe Marktpreise auf.

Die Dokumente WO2009/026641 und EP2570769 offenbaren ein System zur Positionsbestimmung bzw. ein geodätisches Vermessungssystem zur Positionsbestimmung eines beweglichen Ziels, wobei das bewegliche Ziel eine inertiale Messeinheit aufweist.

Das Dokument WO 2006/0674768 offenbart ein geodätisches Vermessungssystem mit einer Lagebestimmungseinrichtung mit einem Lage-Encoder und einer inertialen Messeinheit gemäß dem Oberbegriff der unabhängigen Ansprüche.

Eine Aufgabe der Erfindung ist die Bereitstellung einer verbesserten Lagebestimmungseinrichtung zur Verwendung in Koordinatenmessgeräten oder geodätischen Vermessungsgeräten. Im Speziellen soll dabei eine erhöhte Messgeschwindigkeit ermöglicht werden, insbesondere wobei nur geringe oder keine Einbussen hinsichtlich Messgenauigkeit hinzunehmen sind.

Eine weitere Aufgabe der Erfindung ist, eine solche verbesserte Lagebestimmungseinrichtung mit möglichst geringem Herstellungsaufwand verfügbar machen zu können.

Diese Aufgaben werden durch die Verwirklichung der kennzeichnenden Merkmale der unabhängigen Ansprüche gelöst.

Merkmale, die die Erfindung in alternativer oder vorteilhafter Weise weiterbilden, sind den abhängigen Patentansprüchen sowie der Beschreibung einschliesslich der Figurenbeschreibungen zu entnehmen.

Die erfindungsgemässe Lagebestimmungseinrichtung für zwei relativ zueinander bewegliche Komponenten eines Koordinatenmessgeräts oder eines geodätischen Vermessungssystems, ist zur Bestimmung einer Lage der zwei Komponenten relativ zueinander ausgebildet. Sie weist mindestens einen Lage-Encoder mit einem an einer der zwei Komponenten angeordneten Lesekopf in Zusammenwirkung mit einem an der anderen der zwei Komponenten angeordneten Code auf. Der Lage-Encoder ist zur Erzeugung von ersten Positionsbestimmungsdaten bezüglich der Lage mit einer ersten Messrate ausgebildet.

Erfindungsgemäss weist die Lagebestimmungseinrichtung ferner mindestens eine inertiale Messeinheit auf zur Bestimmung von translatorischen und/oder rotatorischen Beschleunigungen von mindestens einer der zwei Komponenten und somit zur Erzeugung von zweiten

Positionsbestimmungsdaten bezüglich der Lage mit einer - verglichen mit der ersten Messrate höheren - zweiten Messrate.

Für die durch eine Auswerteeinheit erfolgende Bestimmung der Lage ist nun die Auswerteeinheit dazu ausgebildet und konfiguriert, die von dem mindestens einen Lage-Encoder erzeugten ersten Positionsbestimmungsdaten und die von der mindestens einen inertialen Messeinheit erzeugten zweiten Positionsbestimmungsdaten zu erfassen, miteinander zu korrelieren und daraus die Lage zu bestimmen mit einer dritten Messrate, die zumindest höher ist als die erste Messrate.

Insbesondere ist die Auswerteeinheit dabei dazu ausgebildet und konfiguriert, anhand der zweiten Positionsbestimmungsdaten für Zeitpunkte innerhalb von Zwischenzeitfenstern, die zwischen aufeinander folgenden Messzeitpunkten der ersten Messrate liegen, die Lage zu bestimmen. Dabei können im Speziellen die zweiten Positionsbestimmungsdaten jeweils nur für die Zwischenzeitfenster herangezogen werden und für Messzeitpunkte der ersten Messrate die Lage nur anhand der ersten Positionsbestimmungsdaten bestimmt werden.

Vorteilhaft ist die Auswerteeinheit dazu ausgebildet und konfiguriert, die erfassten zweiten Positionsbestimmungsdaten jeweils bezüglich eines jeweils aktuellsten vorliegenden Wertes für die ersten Positionsbestimmungsdaten zu referenzieren. In vorgegebenen Zeitintervallen können dazu beispielsweise die von der inertialen Messeinheit empfangenen zweiten Positionsbestimmungsdaten auf zuvor von dem Lage-Encoder empfangene erste Positionsbestimmungsdaten als (genauere) Referenz zu korrigieren und damit einen jeweils neuen Initialwert für in einem zeitlichen Verlauf zu empfangende weitere zweite Positionsbestimmungsdaten zu setzen, sodass ein im Lauf der Zeit während den Zwischenzeitfenstern über die zweite Positionsbestimmungsdaten entstehender Drift im Bestimmen der Lage jeweils wieder im Takt der ersten Messrate zu Null gesetzt werden kann.

Insbesondere kann die Auswerteeinheit ausgebildet sein zur Korrelation der ersten und zweiten Positionsbestimmungsdaten mithilfe eines definierten Algorithmus, insbesondere eines Kalman-Filters oder Divided-Difference-Filters, dem die ersten und zweiten Positionsbestimmungsdaten zugeführt werden und der mit einer Rate getaktet abläuft, welche zumindest so hoch ist wie die dritte Messrate, insbesondere wobei die Rate gleich der dritten Messrate ist.

Damit wird eine verbesserte Lagebestimmungseinrichtung bereitgestellt, mit der eine erhöhte Messgeschwindigkeit bei einer Messgenauigkeit, die vergleichbar mit derjenigen etablierter Lage-Encoder ist, ermöglicht wird. Die hohe Messgenauigkeit wird dabei durch die Verwendung von Lage-Encodern gewährleistet, und die hohe Messgeschwindigkeit durch die Kombination der Messungen mittels des Lage-Encoders mit Messungen mittels der inertialen Messeinheit. Eine dauerhaft hohe Messgenauigkeit wird durch den erfindungsgemässen, sich wiederholenden Abgleich der mit der inertialen Messeinheit bestimmten Daten mit den Messwerten des Lage-Encoders gewährleistet (insbesondere wobei sich der Abgleich im Takt der ersten Messrate wiederholt).

Für die Korrelation der ersten und der zweiten Positionsbestimmungsdaten ist - wie schon erwähnt - beispielsweise eine Datenverrechnung mithilfe eines Kalmanfilters geeignet. Ein solcher Algorithmus ermöglicht eine schnelle Datenverarbeitung.

Die erfindungsgemässe Kombination mit einer vergleichsweise niedrigen Messrate erhobener erster Positionsbestimmungsdaten und mit einer vergleichsweise hohen Messrate erhobener zweiter Positionsbestimmungsdaten ermöglicht in dieser Zusammenwirkung eine hohe Messrate der erfindungsgemässen Lagebestimmungseinrichtung, beispielsweise in einer Grössenordnung von 1000 Hz und mehr.

Dadurch wird vorteilhaft auch ein Einsatz relativ langsam, beispielsweise mit nur 1 Hz, arbeitender, aber dafür kostengünstiger Lage-Encoder ermöglicht, da deren langsame Messgeschwindigkeit durch die Kombination mit den Messdaten schnell arbeitender inertialer Messeinheiten kompensiert wird.

Gemäss einer Ausführungsform der Erfindung sind für Korrekturen und Zurücksetzungen der empfangenen zweiten Positionsbestimmungsdaten auf zuvor empfangene erste Positionsbestimmungsdaten jeweils mindestens eine inertiale Messeinheit und ein Lage-Encoder einander zugeordnet.

Der Lage-Encoder kann technisch unterschiedlich ausgeführt sein. In einer Ausführung kann der Lesekopf einen optisch auslesenden Sensor, insbesondere eine Sensorzeile oder einen Flächensensor, aufweisen und der Code durch ein optisch auslesbares Muster aus einer Vielzahl von optischen Code-Elementen (z.B. mit speziellen Lichtdurchlässigkeits-, Reflektivitäts-, Brechungs- oder Beugungseigenschaften, wie dies dem Fachmann an sich bekannt ist) gebildet sein. In einer anderen Ausführung kann der Lesekopf einen kapazitiv auslesenden Sensor, insbesondere mit einem oder mehreren Kondensatoren, aufweisen und der Code durch ein kapazitiv auslesbares Muster aus einer Vielzahl von Code-Elementen mit spezieller Permittivität gebildet sein, insbesondere strukturierte Platten oder Plastikstreifen. In einer noch anderen Ausführung kann der Lesekopf einen induktiv auslesenden Sensor, insbesondere einer oder mehreren Spulen, aufweisen und der Code durch ein induktiv auslesbares Muster aus einer Vielzahl von Code-Elementen mit spezieller Permeabilität gebildet sein, insbesondere Magnetstreifen.

Gemäss einer Ausführungsform einer erfindungsgemässen Lagebestimmungseinrichtung ist der Lage-Encoder ausgebildet als ein Linear-Encoder mit einem Lesekopf zum Auslesen eines linearen Codes. Gemäss einer anderen Ausführungsform ist der Lage-Encoder ausgebildet als ein Winkel-Encoder mit einem Lesekopf zum Auslesen eines im Wesentlichen kreisförmig oder teilkreisförmig angeordneten Codes.

Die erfindungsgemässe Lagebestimmungseinrichtung kann also mit einem gängigen, verbreitet erhältlichen Lage-Encoder ausgestattet sein.

Gemäss einer Ausführungsform weist die inertiale Messeinheit Beschleunigungssensoren und/oder Gyroskop-Sensoren auf und ist als MEMS-Mikrosystem oder MOEMS-Mikrosystem (also "Micro-Electro-Mechanical System" oder "Micro-Optoelectro-Mechanical System") ausgebildet. Wesentlich ist dabei, dass die inertiale Messeinheit eine Beschleunigung in jener Richtung bzw. eine Drehrate um jene Achse bestimmbar macht, in welcher die beiden Komponenten, deren relative Lage es zu bestimmen gilt, relativ zueinander beweglich sind (sodass durch die inertiale Messeinheit mit den durch den Lage-Encoder erzeugbaren Messdaten korrespondierende Positionsdaten messbar sind).

Allerdings kann, auch wenn für die Erfindung nicht zwingend erforderlich, die inertiale Messeinheit auch ausgebildet sein für eine Bestimmung von Beschleunigungs-Messwerten bezüglich dreier, insbesondere zueinander orthogonaler Raumrichtungen und für eine Bestimmung von Drehraten um drei, insbesondere relativ zueinander orthogonal stehende Achsen.

Wie dem Fachmann bekannt, können dabei durch die entsprechende Kombination mehrerer Inertialsensoren in einer inertialen Messeinheit die Beschleunigungen der sechs Freiheiten in der Regel anhand der folgenden Sensorarten gemessen werden:
Drei orthogonal angeordnete Beschleunigungssensoren (auch als Translationssensoren bezeichnet) detektieren die lineare Beschleunigung in x- bzw. y- bzw. z-Achse. Daraus kann die translatorische Bewegung (sowie die relative Position) berechnet werden. Drei orthogonal angeordnete Drehratensensoren (auch als gyroskopische Sensoren bezeichnet) messen die Winkelbeschleunigung um die x- bzw. y- bzw. z-Achse. Daraus kann die Rotationsbewegung (sowie die relative Ausrichtung) berechnet werden.

Solche inertiale Sensoren sind dabei im Allgemeinen nicht geeignet für kontinuierliche, genaue Positionsbestimmungen, da sie nur Messwerte basierend auf Beschleunigungen liefern, aber keine absoluten Positionsbestimmungsdaten. Infolgedessen unterliegen aus den Messwerten derartiger Sensoren abgeleitete Positionsbestimmungsdaten einer kontinuierlichen Drift, insbesondere beruhend auf sich fortpflanzenden und damit akkumulierenden Fehlern in Messung von Beschleunigungen oder Lageveränderungen. Dieser Nachteil wirkt sich jedoch durch die erfindungsgemässe Einbettung in eine Lagebestimmungseinheit nicht wesentlich negativ auf das Gesamtergebnis der Lagebestimmung aus. Derartige auf MEMS-basierte Komponenten beruhende inertiale Messeinheiten, die als miniaturisierte Geräte oder Baugruppen ausgebildet sind, sind aus dem Stand der Technik bekannt.

Gegenstand der vorliegenden Erfindung ist auch ein Koordinatenmessgerät CMM (in portaler oder Gelenkarm-Bauweise oder auch ausgeführt als Lasertracker) oder ein geodätisches Vermessungssystem (wie ein Theodolit oder ein Tachymeter), zur Bestimmung einer Position eines Zielobjekts, mit einer erfindungsgemässen Lagebestimmungseinrichtung nach einer der vorangehend beschriebenen Ausführungsformen. Die Lagebestimmungseinrichtung wird dann zur Bestimmung von Winkeln in Drehgelenken (siehe Gelenkarm-CMM, Lasertracker, Theodolit oder Tachymeter) oder von Längen in Linearverschiebemechanismen (siehe beispielsweise Portal-CMM) angewendet.

Gemäss einer bevorzugten Ausführungsform ist jedem beweglichen und/oder separat beweglichen Element des Vermessungsgeräts mindestens eine inertiale Messeinheit zur Messung von Beschleunigungen oder Lageveränderungen zugeordnet.

Gegenstand der Erfindung ist auch ein Messverfahren zur Bestimmung einer Position eines Zielobjekts unter Verwendung einer erfindungsgemässen Lagebestimmungseinrichtung, welche mindestens einen Lage-Encoder mit einem an einer der zwei Komponenten angeordneten Lesekopf in Zusammenwirkung mit einem an der anderen der zwei Komponenten angeordneten Code und mindestens eine inertiale Messeinheit aufweist. Das Messverfahren weist unter anderem folgende Schritte auf: Ausführung einer absoluten Bestimmung der Position des Zielobjekts und Erzeugung von absoluten ersten Positionsbestimmungsdaten mit einer ersten Messfrequenz mittels des mindestens einen Lage-Encoders, und Bestimmung von translatorischen und/oder rotatorischen Beschleunigungen und/oder Lageveränderungen von beweglichen Komponenten der Lagebestimmungseinrichtung und Erzeugung von zweiten Positionsbestimmungsdaten der Position des Zielobjekts mit einer zweiten Messfrequenz mittels der mindestens einen inertialen Messeinheit. Erfindungsgemäss weist das Messverfahren folgende weitere Schritte auf: Auslesen der von dem mindestens einen Lage-Encoder erzeugten ersten Positionsbestimmungsdaten und der von der mindestens einen inertialen Messeinheit erzeugten zweiten Positionsbestimmungsdaten mithilfe der Auswerteeinheit, zeitliches Korrelieren der ausgelesenen ersten Positionsbestimmungsdaten und zweiten Positionsbestimmungsdaten mithilfe der Auswerteeinheit, in vorgegebenen Zeitintervallen Korrigieren der von der inertialen Messeinheit empfangenen zweiten Positionsbestimmungsdaten auf zuvor von dem Lage-Encoder empfangene absolute erste Positionsbestimmungsdaten und damit Setzen eines jeweils neuen Initialwerts für in einem zeitlichen Verlauf zu empfangende weitere zweite Positionsbestimmungsdaten.

Bevorzugt erfolgt dabei die Korrelation der ersten und zweiten Positionsbestimmungsdaten unter Verwendung eines Kalman-Filters.

Vorteilhaft wird das erfindungsgemässe Messverfahren mit einer Messrate von 1000 Hz und mehr ausgeführt.

Gegenstand der Erfindung ist ausserdem ein Computerprogrammprodukt mit Programmcode, der auf einem maschinenlesbaren Träger gespeichert ist, zur Durchführung des erfindungsgemässen Messverfahrens, insbesondere wenn der Programmcode auf einer Auswerteeinheit einer erfindungsgemässen Lagebestimmungseinrichtung ausgeführt wird.

Die erfindungsgemässe Lagebestimmungseinrichtung, ein mit einer solchen Lagebestimmungseinrichtung ausgestattetes Koordinatenmessgerät oder geodätisches Vermessungssystem sowie ein zugeordnetes erfindungsgemässes Messverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Fig. 1a/1b/1c: eine Illustration eines mit einer erfindungsgemässen Lagebestimmungseinrichtung ausführbaren Messverfahrens;
- Fig. 2: ein erfindungsgemässes Koordinatenmessgerät, beispielhaft ausgebildet als eine PortalKoordinatenmessmaschine und ausgestattet mit einer erfindungsgemässen Lagebestimmungseinrichtung;
- Fig. 3: in einer vergrösserten Darstellung entsprechend der Portal-Koordinatenmessmaschine von Figur 2 eine Illustration des Zusammenwirkens eines Linear-Encoders und einer inertialen Messeinheit einer erfindungsgemässen Lagebestimmungseinrichtung;
- Fig. 4: einen Roboterarm, der mit einer erfindfungsgemässen Lagebestimmungseinrichtung ausgestattet ist;
- Fig. 5: ein illustrativ als ein Theodolit ausgebildetes, erfindungsgemässes geodätisches Vermessungsgerät, das mit einer erfindungsgemässen Lagebestimmungseinrichtung ausgestattet ist; und
- Fig. 6: das Zusammenwirken eines Winkel-Encoders und inertialer Messeinheiten einer erfindungsgemässen Lagebestimmungseinrichtung.

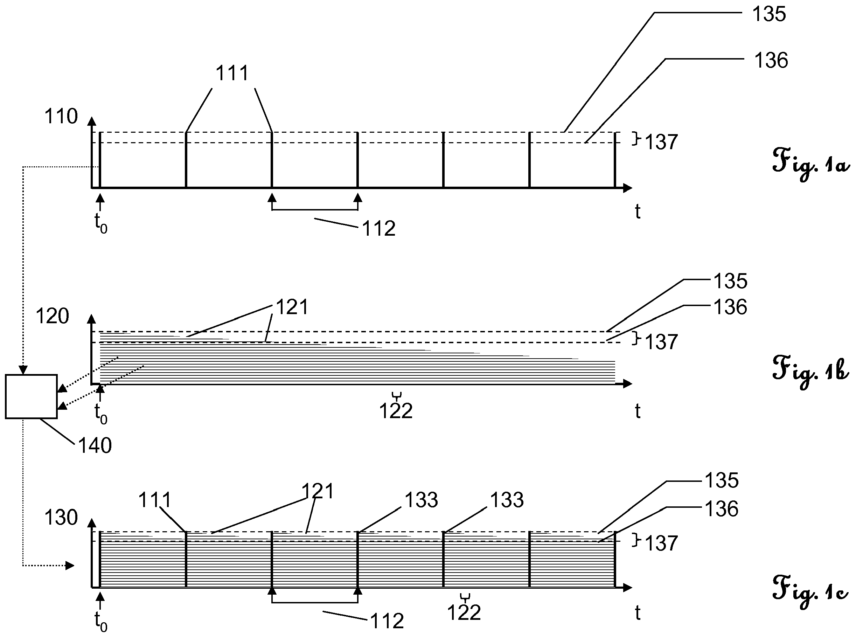

Die Figuren 1a, 1b, 1c illustrieren ein mit der erfindungsgemässen Lagebestimmungseinrichtung ausführbares Messverfahren.

Dabei zeigt Figur 1a schematisch während eines Zeitverlaufs t erfasste erste Positionsbestimmungsdaten 110, die als absolute erste Bestimmungswerte 111 in Zeitintervallen 112 von einem Lage-Encoder nach dem Stand der Technik, wie beispielsweise einem Linear-Encoder oder einem Winkel-Encoder, gemessen werden. Die erfassten Bestimmungswerte 111 stimmen üblicherweise mit einer erwünschten maximalen Genauigkeit 135 überein und übertreffen eine vordefinierte minimale Genauigkeit 136, die durch eine Differenz 137 zwischen der maximalen Genauigkeit 135 und der minimalen Genauigkeit 136 definiert ist. Dabei sind die Zeitintervalle 112 zwischen sequentiell erfassten absoluten ersten Bestimmungswerten relativ gross bzw. ist die entsprechend Datenerfassungsrate relativ niedrig, typischerweise entsprechend einer Messrate in einer Grössenordnung von 1 Hz bis 20 Hz.

Figur 1b zeigt schematisch einen typischen Zeitverlauf t zweiter Positionsbestimmungsdaten 120, die aus von einer inertialen Messeinheit gemessenen Beschleunigungs- oder Lageveränderungsdaten von beweglichen Komponenten der Lagebestimmungseinrichtung erzeugt werden. Eine sequentielle Aufnahme zugeordneter zweiter Bestimmungswerte 121 erfolgt in relativ kurzen Zeitintervallen 122 bzw. mit einer relativ hohen entsprechenden Datenerfassungsrate.

Zu einem Anfangszeitpunkt t0 stimmen die Bestimmungswerte 121 der zweiten Positionsbestimmungsdaten, beispielsweise aufgrund einer anfänglichen Eichung, mit einem Wert entsprechend maximaler Genauigkeit 135 überein. Die sequentiell weiter aufgenommenen Bestimmungswerte 121 zeigen jedoch eine zeitliche Drift, wie in Figur 1b schematisch dargestellt, mit einer starken Unterschreitung der vordefinierten minimalen Genauigkeit 136. Dieses ist dadurch bedingt, dass Sensoren einer inertialen Messeinheit nur Messwerte basierend auf Beschleunigungen oder Lageveränderungen liefern, aber keine absoluten Positionsbestimmungsdaten. Infolgedessen unterliegen aus den Messwerten derartiger Sensoren abgeleitete Positionsbestimmungsdaten einer kontinuierlichen Drift, insbesondere beruhend auf sich fortpflanzenden und damit akkumulierenden Fehlern in Messung von Beschleunigungen oder Lageveränderungen.

Daher ist eine inertiale Messeinheit zwar vorteilhaft für eine Datenerfassung mit einer hohen Messrate, beispielsweise in einer Grössenordnung von 50 Hz bis 2000 Hz, aber nicht geeignet als eine alleinige Vorrichtung zur Erzeugung von Positionsbestimmungsdaten mit einer kontinuierlich ausreichenden Genauigkeit.

Der erfindungsgemässe Ansatz ist anhand von Figur 1c illustriert. Erfindungsgemäss ist der Lagebestimmungseinrichtung eine Auswerteeinheit 140 zugeordnet, die dazu ausgebildet ist, die von dem mindestens einen Lage-Encoder erzeugten ersten Positionsbestimmungsdaten 110 und die von der mindestens einen inertialen Messeinheit erzeugten zweiten Positionsbestimmungsdaten 120 mit ihren entsprechenden Bestimmungswerten 111, 121 auszulesen, miteinander zeitlich zu korrelieren und in vorgegebenen Zeitintervallen 132 die von der inertialen Messeinheit empfangenen zweiten Positionsbestimmungsdaten 120 bzw. zweiten Bestimmungswerte 121 auf zuvor von dem Lage-Encoder empfangene absolute erste Positionsbestimmungsdaten 110 bzw. erste Bestimmungswerte 111 zu korrigieren und damit einen jeweils neuen Initialwert 133 für in einem zeitlichen Verlauf weiter zu empfangende zweite Positionsbestimmungsdaten 120 bzw. zweite Bestimmungswerte 121 zu setzen.

Dadurch werden kombinierte Positionsbestimmungsdaten 130 in sehr kurzen Zeitintervallen 122 entsprechend den Zeitintervallen 122 mit einer inertialen Messeinheit erzeugt, die aber, aufgrund der jeweils in den Zeitintervallen 132 vorgenommenen Korrekturen der zweiten Positionsbestimmungsdaten innerhalb einer vordefinierten Abweichung 137 zwischen der maximalen Genauigkeit 135 und der vordefinierten ausreichenden Genauigkeit 136 fixiert sind.

Gemäss einer Ausführungsform ist die Auswerteeinheit 140 dazu ausgebildet, Korrekturen und Zurücksetzungen der empfangenen zweiten Positionsbestimmungsdaten 120 in einem Zeitintervall 132, das durch einen Zeitabstand bis zu einer vordefinierbaren Abweichung 137 zwischen einem durch die ersten Positionsbestimmungsdaten erzeugten Absolutwert und einem durch die zweiten Positionsbestimmungsdaten erzeugten abweichenden zweiten Bestimmungswert 121 von einem Bediener der Lagebestimmungseinrichtung definierbar ist, zu bewirken.

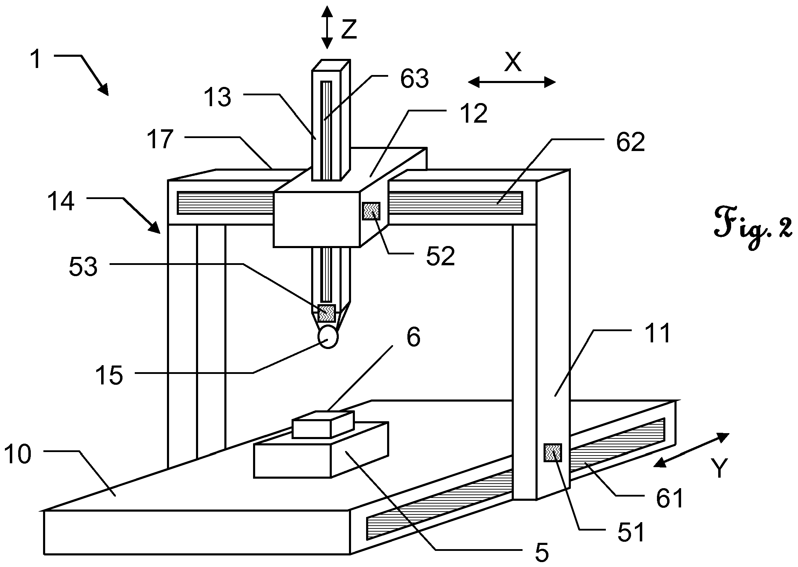

Fig. 2 zeigt ein erfindungsgemässes Koordinatenmessgerät 1, beispielhaft ausgebildet als eine Portal-Koordinatenmessmaschine 1.

Die Koordinatenmessmaschine 1 weist eine Basis 10 auf, auf der ein Portal 14 derart angeordnet ist, dass es in einer longitudinalen Richtung (Y-Richtung) bewegbar ist. Das Portal 14 weist zwei Portalträger 11 auf, die miteinander an ihren oberen Enden über eine Brücke 17 verbunden sind.

Auf der Brücke 17 ist ein X-Schlitten 12 angeordnet, der entlang der Brücke 17, d.h. in einer die beiden Portalträger 11 verbindenden Raumrichtung (X-Richtung) bewegbar ist. Eine Stange oder Z-Säule 13 ist in einer dritten Raumrichtung (Z-Richtung) bewegbar und wird in einer Aufnahme des X-Schlittens 12 geführt. Für diese Bewegung in Z-Richtung ist die Z-Säule 13 in Lagern geführt, welche Bestandteile des Schlittens 12 sind. Vorzugsweise sind die drei Raumrichtungen X, Y und Z senkrecht zueinander ausgerichtet, auch wenn dieses keine Voraussetzung für die vorliegende Erfindung ist.

Die Koordinatenmessmaschine 1 ist vorgesehen für die Bestimmung eines oder einer Vielzahl von Messpunkten 6 auf einem Objekt 5 und weist daher drei lineare Führungsmechanismen zur Ermöglichung der Bewegung eines an der Z-Säule 13 an derem der Basis 10 zugewandtem, unterem freiem Ende angeordneten Messkopfs 15, beispielsweise ausgebildet für taktile Messungen, in den drei Raumrichtungen X, Y und Z relativ zur Basis 10.

Jeder lineare Führungsmechanismus hat eine zugeordnete Führung (in X-, Y- bzw. Z-Richtung). Ausserdem weist jeder lineare Führungsmechanismus einen zugeordneten, in diesem Beispiel als Linear-Encoder ausgebildeten, Lage-Encoder zur Positionsbestimmung in der zugeordneten Führungsrichtung auf, wobei die jeweiligen Linear-Encoder mit, als Messskalen 62, 61, 63 für Positionsbestimmungen in X-, Y- bzw. Z-Richtung ausgebildeten, zugeordneten Codes 61, 62, 63 zusammenwirken.

Erfindungsgemäss weist das Koordinatenmessgerät ausserdem inertiale Messeinheiten 51 zur Messung von Beschleunigungen und Lageveränderungen des Portals 14 mit den Portalträgern 11 in Y-Richtung, 52 zur Messung von Beschleunigungen und Lageveränderungen des Schlittens 12 in X-Richtung, und 53 zur Messung von Beschleunigungen und Lageveränderungen der Z-Säule 13 mit dem Probenkopf 15 in Z-Richtung auf.

Die Funktions- und Betriebsweise der Lagebestimmungseinrichtung, die in diesem Beispiel aus der Kombination der Lage-Encoder, welche die Messskalen 61, 62, 63 aufweisen, mit den inertialen Messeinheiten 51, 52, 53 besteht, ist analog wie anhand der Figuren 1a bis 1c vorangehend beschrieben.

Die Erfindung ist nicht beschränkt auf Portal-Koordinatenmessmaschinen, wie in Fig. 2 dargestellt. Für die Erfindung geeignet ist vielmehr jede bekannte Art eines Koordinatenmessgeräts, insbesondere beispielsweise auch eine sogenannte "Articulated Arm Coordinate Measuring Machine" welches eine Objektoberflächenvermessung mit einem geeigneten Messkopf ermöglicht.

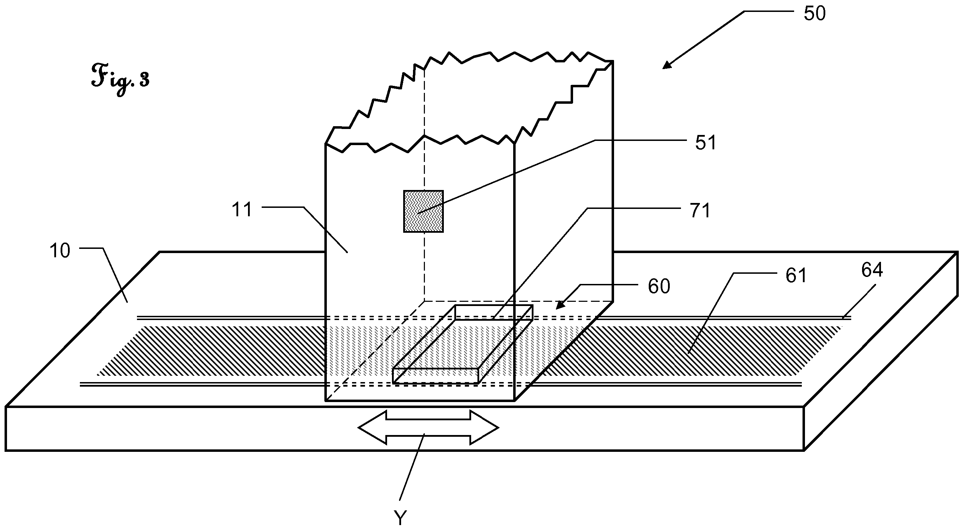

Figur 3 illustriert in einer vergrösserten Darstellung entsprechend der Portal-Koordinatenmessmaschine 1 von Figur 2 das Zusammenwirken eines Linear-Encoders 60 und einer inertialen Messeinheit 51 einer erfindungsgemässen Lagebestimmungseinrichtung 50. Der Linear-Encoder 60 umfasst einen Lesekopf 71 zur Auslesung eines Codes 61 eines CodeTrägers 64. Der Lesekopf 71 ist an einem unteren Ende eines Portalträgers 11 in einer adäquaten Nähe zu dem an dem Basisteil 10 angebrachten Code-Träger 64 angeordnet, um dessen Code 61 auslesen zu können. An dem Portalträger 11 ist eine inertiale Messeinheit 51 angeordnet, zur Messung von Beschleunigungen oder Lageveränderungen des Portalträgers 11 bezüglich des Basisteils 10.

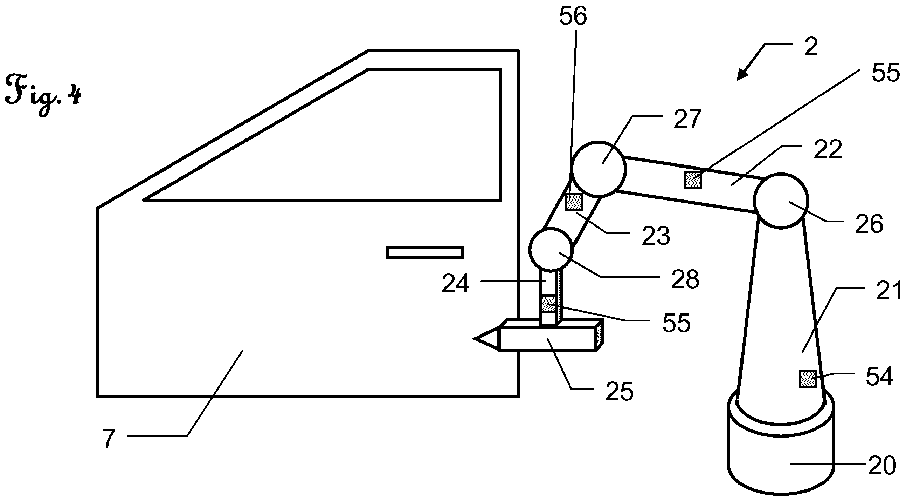

Eine erfindungsgemässe Lagebestimmungseinrichtung kann auch zur Kontrolle bzw. Überwachung der Lageveränderungen beweglicher Komponenten eines Roboterarms 2 mit einem davon geführten Werkzeug 25 zur Bearbeitung eines Objekts 7 eingesetzt werden, wie dieses beispielhaft in Fig. 4 dargestellt ist. Bei dem zu bearbeitenden Objekt 7 handelt es sich in diesem Fall um eine Autotür. Der schematisch und beispielhaft dargestellte Roboterarm 2 umfasst mehrere Abschnitte 20, 21, 22, 23, 24, die über Gelenke 26, 27, 28 gegeneinander verstellbar bzw. verdrehbar sind. Typischerweise wird ein solcher Roboterarm, beispielsweise als Bestandteil einer Werkzeugmaschine, von einer nicht dargestellten Auswerte-, Kontroll- und Steuereinheit ferngesteuert. Die Gelenke 26, 27, 28 sind mit ebenfalls nicht dargestellten, in diesem Fall zur Bestimmung von gegenseitigen Verdrehungen der Abschnitte 20, 21, 22, 23, 24 als Winkel-Encodern ausgebildeten Lage-Encodern ausgestattet. Zur Bestimmung von Beschleunigungen und Ermöglichung einer hohen Messrate sind an den Roboterarm-Abschnitten 21, 22, 23 und 24 jeweils inertiale Messeinheiten 54, 55, 56 und 57 angebracht.

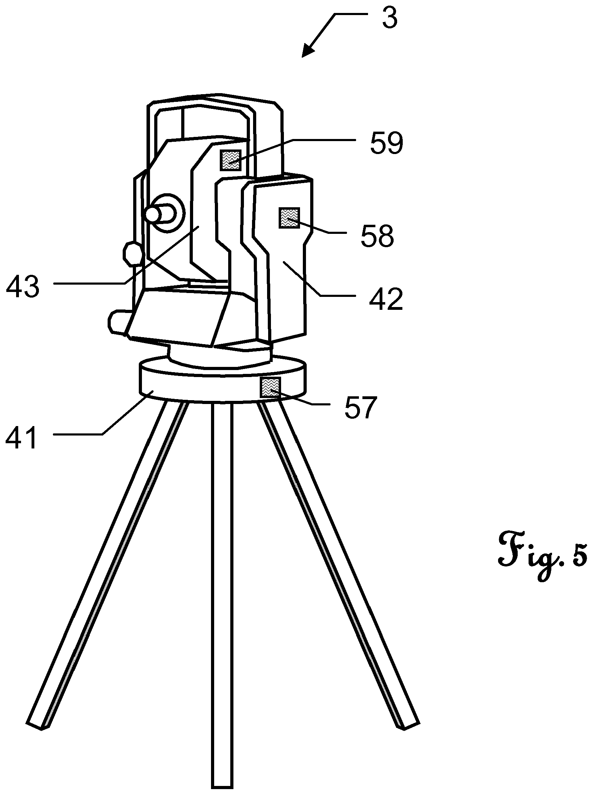

Als ein weiteres Einsatzbeispiel zeigt Fig. 5 zeigt ein illustrativ als eine Totalstation bzw. als ein Theodolit 3 ausgebildetes, geodätisches Vermessungsgerät, das mit einer erfindungsgemässen Lagebestimmungseinrichtung ausgestattet ist.

Der Theodolit 3 umfasst eine in diesem Beispiel als ein dreibeiniges Stativ ausgebildete Basis 41 mit einem darauf drehbar gelagerten Oberteil 42. Eine am Oberteil 42 schwenkbar gelagerte Anzieleinheit 43 ist typischerweise mit einer zu einer Emission eines Laserstrahls ausgebildeten Laserquelle und einem Laserlicht-Detektor ausgestattet und stellt damit eine Distanzmessfunktionalität zur Bestimmung der Position eines Zielobjekts bereit.

Die räumliche Ausrichtung der Anzieleinheit 43 gegenüber der Basis 41 ist über zwei nicht dargestellte Winkelmesser bzw. Winkel-Encoder erfassbar.

Zur Bestimmung von Beschleunigungen und Ermöglichung einer hohen Messrate sind an der Basis 41, am Oberteil 42 und an der Anzieleinheit 43 jeweils inertiale Messeinheiten 57, 58 und 59 angebracht.

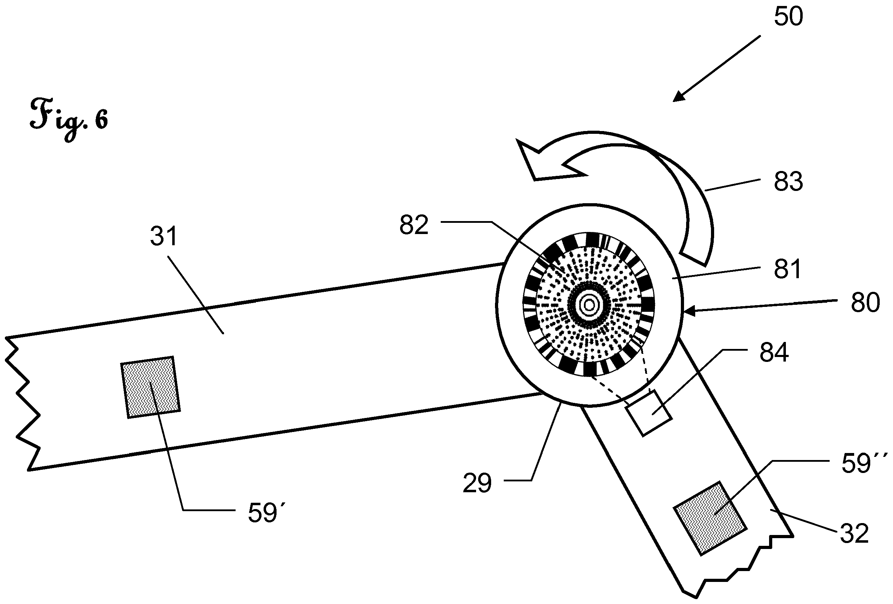

Fig. 6 illustriert das Zusammenwirken eines Winkel-Encoders 80 und inertialer Messeinheiten 51 einer erfindungsgemässen Lagebestimmungseinrichtung 50. Zwei armähnliche Abschnitte 31 und 32 sind über ein Drehgelenk 29 miteinander verbunden und um dieses Gelenk 29 in Richtung des Pfeils 83 gegeneinander verschwenkbar. Die Winkeleinstellungen zwischen den beiden Abschnitten 31 und 32 werden mit einem Winkel-Encoder 81 gemessen. Der Winkel-Encoder 80 umfasst einen Lesekopf 84 zur Auslesung eines Codes 81 mit mehreren konzentrischen Code-Spuren auf einem Code-Träger 81. Zur Bestimmung von Beschleunigungen und Ermöglichung einer hohen Messrate sind an den beiden gegeneinander verschwenkbaren Abschnitten 31 und 32 inertiale Messeinheiten 59' und 59" angeordnet.

## Patentansprüche

1. Lagebestimmungseinrichtung (50) für zwei relativ zueinander bewegliche Komponenten (10, 11) eines Koordinatenmessgeräts (1, 2) oder eines geodätischen Vermessungssystems (3) zur Bestimmung einer Lage der zwei Komponenten (10, 11) relativ zueinander, wobei die Lagebestimmungseinrichtung (50) mindestens einen Lage-Encoder (60, 80) aufweist mit einem an einer der zwei Komponenten (10, 11) angeordneten Lesekopf (71, 84) in Zusammenwirkung mit einem an der anderen der zwei Komponenten (11, 10) angeordneten Code (61, 62, 63, 82) zur Erzeugung von ersten Positionsbestimmungsdaten (110) bezüglich der Lage mit einer ersten Messrate, wobei die Lagebestimmungseinrichtung
• mindestens eine inertiale Messeinheit (51, 52, 53, 54, 55, 56, 57, 58, 59, 59', 59'') zur Bestimmung von translatorischen und/oder rotatorischen Beschleunigungen von mindestens einer der zwei Komponenten (10, 11) und zur darüber erfolgenden Erzeugung von zweiten Positionsbestimmungsdaten (120) bezüglich der Lage mit einer zweiten Messrate aufweist und
• eine Auswerteeinheit (140) aufweist, die dazu ausgebildet und konfiguriert ist, die von dem mindestens einen Lage-Encoder (60, 80) erzeugten ersten Positionsbestimmungsdaten (110) und die von der mindestens einen inertialen Messeinheit (51, 52, 53, 54, 55, 56, 57, 58, 59, 59', 59'') erzeugten zweiten Positionsbestimmungsdaten (120) zu erfassen, miteinander zu korrelieren und daraus die Lage zu bestimmen mit einer dritten Messrate, **dadurch gekennzeichnet, dass** die zweite Messrate höher ist als die erste Messrate, und dass die dritte Messrate zumindest höher ist als die erste Messrate.

2. Lagebestimmungseinrichtung (50) nach Anspruch 1, **dadurch gekennzeichnet, dass**
die Auswerteeinheit (140) dazu ausgebildet und konfiguriert ist, anhand der zweiten Positionsbestimmungsdaten (120) für Zeitpunkte innerhalb von Zwischenzeitfenstern, die zwischen aufeinander folgenden Messzeitpunkten der ersten Messrate liegen, die Lage zu bestimmen,
insbesondere wobei jeweils nur für die Zwischenzeitfenster die zweiten Positionsbestimmungsdaten (120) herangezogen werden und für Messzeitpunkte der ersten Messrate die Lage nur anhand der ersten Positionsbestimmungsdaten (110) bestimmt wird.

3. Lagebestimmungseinrichtung (50) nach Anspruch 1 oder 2, **dadurch gekennzeichnet, dass**
die Auswerteeinheit (140) dazu ausgebildet und konfiguriert ist, die erfassten zweiten Positionsbestimmungsdaten (120) jeweils bezüglich eines jeweils aktuellsten vorliegenden Wertes für die ersten Positionsbestimmungsdaten (110) zu referenzieren.

4. Lagebestimmungseinrichtung (50) nach einem der Ansprüche 1 bis 3,
**dadurch gekennzeichnet, dass**
die Auswerteeinheit (140) ausgebildet ist zur Korrelation der ersten Positionsbestimmungsdaten (110) und der zweiten Positionsbestimmungsdaten (120) mithilfe eines definierten Algorithmus, insbesondere eines Kalman-Filters oder Divided-Difference-Filters, dem die ersten und zweiten Positionsbestimmungsdaten (110, 120) zugeführt werden und der mit einer Rate getaktet abläuft, welche zumindest so hoch ist wie die dritte Messrate, insbesondere wobei die Rate gleich der dritten Messrate ist.

5. Lagebestimmungseinrichtung (50) nach einem der Ansprüche 1 bis 4,
**dadurch gekennzeichnet, dass**
die dritte Messrate mindestens 1000 Hz beträgt.

6. Lagebestimmungseinrichtung (50) nach einem der Ansprüche 1 bis 5,
**dadurch gekennzeichnet, dass**
• der Lesekopf einen optisch auslesenden Sensor, insbesondere eine Sensorzeile oder einen Flächensensor, aufweist und der Code durch ein optisch auslesbares Muster aus einer Vielzahl von optischen Code-Elementen gebildet ist,
• der Lesekopf einen kapazitiv auslesenden Sensor, insbesondere mit einem oder mehreren Kondensatoren, aufweist und der Code durch ein kapazitiv auslesbares Muster aus einer Vielzahl von Code-Elementen mit spezieller Permittivität gebildet ist, insbesondere strukturierte Platten oder Plastikstreifen, oder
• der Lesekopf einen induktiv auslesenden Sensor, insbesondere einer oder mehreren Spulen, aufweist und der Code durch ein induktiv auslesbares Muster aus einer Vielzahl von Code-Elementen mit spezieller Permeabilität gebildet ist, insbesondere Magnetstreifen.

7. Lagebestimmungseinrichtung (50) nach einem der Ansprüche 1 bis 6,
**dadurch gekennzeichnet, dass**
der Lage-Encoder (60, 80) ausgebildet ist als ein Linear-Encoder (60) mit einem Lesekopf (71) zum Auslesen eines linearen Codes (61, 62, 63) oder als ein Winkel-Encoder (80) mit einem Lesekopf (84) zum Auslesen eines im Wesentlichen kreisförmig oder teilkreisförmig angeordneten Codes (82).

8. Lagebestimmungseinrichtung (50) nach einem der Ansprüche 1 bis 7,
**dadurch gekennzeichnet, dass**
die inertiale Messeinheit (51, 52, 53, 54, 55, 56, 57, 58, 59, 59', 59") Beschleunigungssensoren und/oder Drehraten-Sensoren aufweist und als MEMS-Mikrosystem ausgebildet ist.

9. Koordinatenmessgerät (1, 2) oder geodätisches Vermessungssystem (3) mit einer Lagebestimmungseinrichtung (50) nach einem der Ansprüche 1 bis 8.

10. Koordinatenmessgerät (1, 2) oder geodätisches Vermessungssystem (3) nach Anspruch 9, **dadurch gekennzeichnet, dass**
jeder längenverschiebbaren Achse bzw. jedem Drehgelenk eine Lagebestimmungseinrichtung (50) nach einem der Ansprüche 1 bis 8 zugeordnet ist.

11. Lagebestimmungsverfahren für zwei relativ zueinander bewegliche Komponenten (10, 11) eines Koordinatenmessgeräts (1, 2) oder eines geodätischen Vermessungssystems (3) zum Bestimmen einer Lage der zwei Komponenten (10, 11) relativ zueinander, mit
• einem Erzeugen von ersten Positionsbestimmungsdaten (110) bezüglich der Lage mit einer ersten Messrate unter Verwendung von einem Lage-Encoder (60, 80), der einen an einer der zwei Komponenten (10, 11) angeordneten Lesekopf (71, 84) in Zusammenwirkung mit einem an der anderen der zwei Komponenten (10, 11) angeordneten Code (61, 62, 63, 82) aufweist,
• einem Erzeugen von zweiten Positionsbestimmungsdaten (120) bezüglich der Lage mit einer zweiten Messrate unter Verwendung von einer inertialen Messeinheit (51, 52, 53, 54, 55, 56, 57, 58, 59, 59', 59"), die dafür translatorische und/oder rotatorische Beschleunigungen von mindestens einer der zwei Komponenten (10, 11) bestimmt, und
• einem miteinander Korrelieren von den ersten und den zweiten Positionsbestimmungsdaten (110, 120) und einem daraus erfolgenden Bestimmen der Lage mit einer dritten Messrate,
**dadurch gekennzeichnet, dass** die zweite Messrate höher ist als die erste Messrate, und dass die dritte Messrate zumindest höher ist als die erste Messrate.

12. Lagebestimmungsverfahren nach Anspruch 11,
**dadurch gekennzeichnet, dass**
anhand der zweiten Positionsbestimmungsdaten (120) für Zeitpunkte innerhalb von Zwischenzeitfenstern, die zwischen aufeinander folgenden Messzeitpunkten der ersten Messrate liegen, die Lage bestimmt wird, insbesondere wobei jeweils nur für die Zwischenzeitfenster die zweiten Positionsbestimmungsdaten (120) herangezogen werden und für Messzeitpunkte der ersten Messrate die Lage nur anhand der ersten Positionsbestimmungsdaten (110) bestimmt wird.

13. Lagebestimmungsverfahren nach Anspruch 11 oder 12,
**dadurch gekennzeichnet, dass**
die erfassten zweiten Positionsbestimmungsdaten (120) jeweils bezüglich eines jeweils aktuellsten vorliegenden Wertes für die ersten Positionsbestimmungsdaten (110) jeweils neu referenziert werden.

14. Lagebestimmungsverfahren nach einem der Ansprüche 11 bis 13,
**dadurch gekennzeichnet, dass**
die ersten und zweiten Positionsbestimmungsdaten (110, 120) mithilfe eines definierten Algorithmus korreliert werden, insbesondere eines Kalman-Filters oder Divided-Difference-Filters, dem die ersten und zweiten Positionsbestimmungsdaten (110, 120) zugeführt werden und der mit einer Rate getaktet abläuft, welche zumindest so hoch ist wie die dritte Messrate, insbesondere wobei die Rate gleich der dritten Messrate ist.

15. Computerprogrammprodukt mit Programmcode, der auf einem maschinenlesbaren Träger gespeichert ist, zur Steuerung und Durchführung des Lagebestimmungsverfahrens nach einem der Ansprüche 11 bis 14, insbesondere wenn der Programmcode auf einer Auswerteeinheit (140) einer Lagebestimmungseinrichtung (50) nach einem der Ansprüche 1 bis 9 ausgeführt wird.

## Claims

1. Location determination apparatus (50) for two components (10, 11), mobile relative to one another, of a coordinate measuring machine (1, 2) or of a geodetic surveying system (3), for determining a location of the two components (10, 11) relative to one another, wherein the location determination apparatus (50) comprises at least one location encoder (60, 80) having a read head (71, 84), arranged at one of the two components (10, 11), in cooperation with a code (61, 62, 63, 82), arranged at the other of the two components (11, 10), for generating first position determination data (110) with respect to the location at a first measurement rate,
wherein the location determination apparatus comprises
• at least one inertial measurement unit (51, 52, 53, 54, 55, 56, 57, 58, 59, 59', 59") for determining translational and/or rotational accelerations of at least one of the two components and, moreover, for generating second position determination data (120) with respect to the location at a second measurement rate, and
• an evaluation unit (140), which is embodied and configured to acquire the first position determination data (110) generated by the at least one location encoder (60, 80) and the second position determination data (120) generated by the at least one inertial measurement unit (51, 52, 53, 54, 55, 56, 57, 58, 59, 59', 59"), correlate said position determination data with one another and determine the location therefrom at a third measurement rate,
**characterized in that**
the second measurement rate is higher than the first measurement rate, and that the third measurement rate is at least higher than the first measurement rate.

2. Location determination apparatus (50) according to Claim 1,
**characterized in that**
the evaluation unit (140) is embodied and configured to determine the location on the basis of the second position determination data (120) for times within intermediate time windows which lie between successive measurement times of the first measurement rate, in particular wherein the second position determination data (120) are only used in each case for the intermediate time window and the location is determined on the basis of the first position determination data (110) only for measurement times of the first measurement rate.

3. Location determination apparatus (50) according to Claim 1 or 2,
**characterized in that**
the evaluation unit (140) is embodied and configured to reference the acquired second position determination data (120), in each case with respect to a respectively most current available value for the first position determination data (110).

4. Location determination apparatus (50) according to any one of Claims 1 to 3,
**characterized in that**
the evaluation unit (140) is embodied to correlate the first position determination data (110) and the second position determination data (120) with the aid of a defined algorithm, in particular a Kalman filter or a divided-difference filter, to which the first and second position determination data (110, 120) are fed and which operates clocked at a rate which is at least as high as the third measurement rate, in particular wherein the rate equals the third measurement rate.

5. Location determination apparatus (50) according to any one of Claims 1 to 4,
**characterized in that**
the third measurement rate is at least 1000 Hz.

6. Location determination apparatus (50) according to any one of Claims 1 to 5,
**characterized in that**
• the read head has an optically reading sensor, in particular a sensor line or an area sensor, and the code is formed by an optically readable pattern made of a multiplicity of optical code elements,
• the read head has a capacitively reading sensor, in particular with one or more capacitors, and the code is formed by a capacitively readable pattern made of a multiplicity of code elements with specific permittivity, in particular structured plates or plastic strips, or
• the read head has an inductively reading sensor, in particular one or more coils, and the code is formed by an inductively readable pattern made of a multiplicity of code elements with specific permeability, in particular magnetic strips.

7. Location determination apparatus (50) according to any one of Claims 1 to 6,
**characterized in that**
the location encoder (60, 80) is embodied as a linear encoder (60) with a read head (71) for reading a linear code (61, 62, 63) or as an angle encoder (80) with a read head (84) for reading a code (82) arranged in a substantially circular or circular arc shaped manner.

8. Location determination apparatus (50) according to any one of Claims 1 to 7,
**characterized in that**
the inertial measurement unit (51, 52, 53, 54, 55, 56, 57, 58, 59, 59', 59") has acceleration sensors and/or torque sensors and is embodied as a MEMS microsystem.

9. Coordinate measuring machine (1, 2) or geodetic surveying system (3), comprising a location determination apparatus (50) according to any one of Claims 1 to 8.

10. Coordinate measuring machine (1, 2) or geodetic surveying system (3) according to Claim 9,
**characterized in that**
a location determination apparatus (50) according to any one of Claims 1 to 8 is assigned to each longitudinally displaceable axis or each hinge.

11. Location determination method for two components (10, 11), mobile relative to one another, of a coordinate measuring machine (1, 2) or a geodetic surveying system (3), for determining a location of the two components (10, 11) relative to one another, comprising the steps of
• generating first position determination data (110) with respect to the location at a first measurement rate using a location encoder (60, 80), which has a read head (71, 84), arranged at one of the two components (10, 11), in cooperation with a code (61, 62, 63, 82), arranged at the other of the two components (10, 11),
• generating second position determination data (120) with respect to the location at a second measurement rate using an inertial measurement unit (51, 52, 53, 54, 55, 56, 57, 58, 59, 59', 59") which, to this end, determines translational and/or rotational accelerations of at least one of the two components, and
• correlating the first and the second position determination data (110, 120) with one another and, following therefrom, determining the location at a third measurement rate,
**characterized in that**
the second measurement rate is higher than the first measurement rate, and that the third measurement rate is at least higher than the first measurement rate.

12. Location determination method according to Claim 11, **characterized in that**,
for times within intermediate time windows which lie between successive measurement times of the first measurement rate, the location is determined on the basis of the second position determination data (120), in particular wherein the second position determination data (120) are only used in each case for the intermediate time window and the location is determined on the basis of the first position determination data (110) only for measurement times of the first measurement rate.

13. Location determination method according to Claim 11 or 12,
**characterized in that**
the acquired second position determination data (120) are respectively newly referenced, in each case with respect to a respectively most current available value for the first position determination data (110).

14. Location determination method according to any one of Claims 11 to 13,
**characterized in that**
the first and second position determination data (110, 120) are correlated with the aid of a defined algorithm, in particular a Kalman filter or a divided-difference filter, to which the first and second position determination data (110, 120) are fed and which operates clocked at a rate which is at least as high as the third measurement rate, in particular wherein the rate equals the third measurement rate.

15. Computer program product with program code, which is stored on a machine-readable medium, for controlling and carrying out the location determination method according to any one of Claims 11 to 14, in particular if the program code is executed on an evaluation unit (140) of a location determination apparatus (50) according to any one of Claims 1 to 9.

## Revendications

1. Dispositif de détermination de position (50) pour deux composants (10, 11) mobiles l'un par rapport à l'autre d'un appareil de mesure de coordonnées (1, 2) ou d'un système de mesure géodésique (3) pour la détermination d'une position des deux composants (10, 11) l'un par rapport à l'autre, le dispositif de détermination de position (50) comportant au moins un codeur de position (60, 80) avec une tête de lecture (71, 84) disposée sur l'un des deux composants (10, 11) en interaction avec un code (61, 62, 63, 82) disposé sur l'autre des deux composants (10, 11) pour la production de premières données de détermination de position (110) concernant la position avec un première fréquence de mesure, le dispositif de détermination de position (50) comportant
• au moins une unité de mesure inertielle (51, 52, 53, 54, 55, 56, 57, 58, 59, 59', 59'') pour la détermination d'accélérations de translation et/ou de rotation d'au moins l'un des deux composants (10, 11), et
pour la production qui s'ensuit de deuxièmes données de détermination de position (120) concernant la position avec une deuxième fréquence de mesure, et
• une unité d'analyse (140) qui est constituée et configurée pour détecter les premières données de détermination de position (110) produites par le codeur de position (60, 80) au moins au nombre de un et les deuxièmes données de détermination de position (120) produites par l'unité de mesure inertielle (51, 52, 53, 54, 55, 56, 57, 58, 59, 59', 59'') au moins au nombre de un, les corréler entre elles et pour déterminer à partir de cela la position avec une troisième fréquence de mesure,
**caractérisé en ce que** la deuxième fréquence de mesure est plus élevée que la première fréquence de mesure, et **en ce que** la troisième fréquence de mesure est au moins plus élevée que la première fréquence de mesure.

2. Dispositif de détermination de position (50) selon la revendication 1,
**caractérisé en ce que**
l'unité d'analyse (140) est constituée et configurée pour déterminer la position à l'aide des deuxièmes données de détermination de position (120), pour des instants à l'intérieur de fenêtres de temps intermédiaires qui sont situées entre des instants de mesure successifs de la première fréquence de mesure, les deuxièmes données de détermination de position (120) n'étant en particulier respectivement utilisées que pour les fenêtres de temps intermédiaires et, pour des instants de mesure de la première fréquence de mesure, la position n'étant déterminée qu'à l'aide des premières données de détermination de position (110).

3. Dispositif de détermination de position (50) selon la revendication 1 ou 2,
**caractérisé en ce que**
l'unité d'analyse (140) est constituée et configurée pour référencer les deuxièmes données de détermination de position (120) détectées concernant respectivement une valeur présente respectivement la plus actuelle pour les premières données de détermination de position (110).

4. Dispositif de détermination de position (50) selon l'une des revendications 1 à 3,
**caractérisé en ce que**
l'unité d'analyse (140) est constituée pour la corrélation des premières données de détermination de position (110) et des deuxièmes données de détermination de position (120) à l'aide d'un algorithme défini, en particulier un filtre de Kalman ou un filtre Divided-Difference, auquel les premières et deuxièmes données de détermination de position (110, 120) sont conduites et qui fonctionne de façon cadencée à une fréquence qui est au moins aussi élevée que la troisième fréquence de mesure, la fréquence étant en particulier égale à la troisième fréquence de mesure.

5. Dispositif de détermination de position (50) selon l'une des revendications 1 à 4,
**caractérisé en ce que**
la troisième fréquence de mesure est au moins égale à 1 000 Hz.

6. Dispositif de détermination de position (50) selon l'une des revendications 1 à 5,
**caractérisé en ce que**
• la tête de lecture comporte un capteur à lecture optique, en particulier une rangée de capteurs ou un capteur de surface, et le code est formé par un échantillon, lisible optiquement, provenant d'une multiplicité d'éléments de code optiques,
• la tête de lecture comporte un capteur à lecture capacitive, en particulier avec un ou plusieurs condensateurs, et le code est formé par un échantillon, lisible de façon capacitive, provenant d'une multiplicité d'éléments de code ayant une permittivité spéciale, en particulier des plaques ou bandes de plastique structurées, ou
• la tête de lecture comporte un capteur à lecture inductive, en particulier d'une ou de plusieurs bobines, et le code est formé par un échantillon, lisible de façon inductive, provenant d'une multiplicité d'éléments de code ayant une permittivité spéciale, en particulier, en particulier des bandes magnétiques.

7. Dispositif de détermination de position (50) selon l'une des revendications 1 à 6,
**caractérisé en ce que**
le codeur de position (60, 80) est constitué en tant que codeur linéaire (60) avec une tête de lecture (71) pour la lecture d'un code linéaire (61, 62, 63) ou en tant que codeur d'angle (80) avec une tête de lecture (84) pour la lecture d'un code (82) disposé de façon essentiellement circulaire ou partiellement circulaire.

8. Dispositif de détermination de position (50) selon l'une des revendications 1 à 7,
**caractérisé en ce que**
l'unité de mesure inertielle (51, 52, 53, 54, 55, 56, 57, 58, 59, 59', 59'') comporte des capteurs d'accélération et/ou des capteurs de vitesse de rotation et est constituée en tant que microsystème MEMS.

9. Appareil de mesure de coordonnées (1, 2) ou système de mesure géodésique (3) avec un dispositif de détermination de position (50) selon l'une des revendications 1 à 8.

10. Appareil de mesure de coordonnées (1, 2) ou système de mesure géodésique (3) selon la revendication 9, **caractérisé en ce**
**qu'**un dispositif de détermination de position (50) selon l'une des revendications 1 à 8 est affecté à chaque axe déplaçable longitudinalement ou respectivement à chaque articulation rotative.

11. Procédé de détermination de position pour deux composants (10, 11) mobiles l'un par rapport à l'autre d'un appareil de mesure de coordonnées (1, 2) ou d'un système de mesure géodésique (3) pour la détermination d'une position des deux composants (10, 11) l'un par rapport à l'autre, avec
• une production de premières données de détermination de position (110) concernant la position avec une première fréquence de mesure avec utilisation d'un codeur de position (60, 80) qui comporte une tête de lecture (71, 84) disposée sur l'un des deux composants (10, 11) en interaction avec un code (61, 62, 63, 82) disposé sur l'autre des deux composants (10, 11),
• une production de deuxièmes données de détermination de position (120) concernant la position avec une deuxième fréquence de mesure avec utilisation d'une unité de mesure inertielle (51, 52, 53, 54, 55, 56, 57, 58, 59, 59', 59'') qui définit pour cela des accélérations de translation et/ou de rotation d'au moins l'un des deux composants (10, 11), et
• une corrélation entre elles des premières et des deuxièmes données de détermination de position (110, 120) et une définition qui s'ensuit de la position avec une troisième fréquence de mesure, **caractérisé en ce que** la deuxième fréquence de mesure est plus élevée que la première fréquence de mesure, et **en ce que** la troisième fréquence de mesure est au moins plus élevée que la première fréquence de mesure.

12. Procédé de détermination de position selon la revendication 11,
**caractérisé en ce que**,
la position est définie à l'aide des deuxièmes données de détermination de position (120) pour des instants à l'intérieur de fenêtres de temps intermédiaires qui sont situées entre des instants de mesure successifs de la première fréquence de mesure, les deuxièmes données de détermination de position (120) n'étant en particulier respectivement utilisées que pour les fenêtres de temps intermédiaires et, pour des instants de mesure de la première fréquence de mesure, la position n'étant déterminée qu'à l'aide des premières données de détermination de position (110).

13. Procédé de détermination de position selon la revendication 11 ou 12,
**caractérisé en ce que**
les deuxièmes données de détermination de position (120) détectées concernant respectivement une valeur existante respectivement la plus actuelle sont respectivement référencées de nouveau pour les premières données de détermination de position (110).

14. Procédé de détermination de position selon l'une des revendications 11 à 13,
**caractérisé en ce que**
les premières et deuxièmes données de détermination de position (110, 120) sont corrélées à l'aide d'un algorithme défini, en particulier un filtre de Kalman ou un filtre Divided-Difference, auquel les premières et deuxièmes données de détermination de position (110, 120) sont conduites et qui fonctionne de façon cadencée à une fréquence qui est au moins aussi élevée que la troisième fréquence de mesure, la fréquence étant en particulier égale à la troisième fréquence de mesure.

15. Produit de programme informatique avec code de programme qui est enregistré sur un support lisible par machine, pour la commande et la réalisation du procédé de détermination de position selon l'une des revendications 11 à 14, en particulier quand le code de programme est exécuté sur une unité d'analyse (140) d'un dispositif de détermination de position (50) selon l'une des revendications 1 à 9.
